(19) Europäisches Patentamt / European Patent Office / Office européen des brevets

(11) **EP 4 738 463 A1**

(12) **EUROPEAN PATENT APPLICATION**

(43) Date of publication:
06.05.2026 Bulletin 2026/19

(21) Application number: 25210238.9

(22) Date of filing: 21.10.2025

(51) International Patent Classification (IPC):
$H01M\ 4/36^{(2006.01)}$   $H01M\ 4/38^{(2006.01)}$
$H01M\ 4/04^{(2006.01)}$   $H01M\ 4/587^{(2010.01)}$
$H01M\ 4/62^{(2006.01)}$

(52) Cooperative Patent Classification (CPC):
H01M 4/366; H01M 4/0471; H01M 4/386;
H01M 4/587; H01M 4/625

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.10.2024 KR 20240144957

(71) Applicants:
• SK On Co., Ltd.
Seoul 03161 (KR)
• SK Innovation Co., Ltd.
Seoul 03188 (KR)

(72) Inventors:
• CHUNG, Dong Jae
34124 Daejeon (KR)
• LA, Yun Ji
34124 Daejeon (KR)
• KIM, Nak Won
34124 Daejeon (KR)
• PARK, Eun Jun
34124 Daejeon (KR)
• MOON, Joon Hyung
34124 Daejeon (KR)
• LEE, Hyun Ji
34124 Daejeon (KR)

(74) Representative: Prüfer & Partner mbB
Patentanwälte · Rechtsanwälte
Sohnckestraße 12
81479 München (DE)

(54) **SILICON-CARBON-CONTAINING ELECTRODE MATERIAL, METHOD OF MANUFACTURING THE SAME AND LITHIUM SECONDARY BATTERY INCLUDING THE SAME**

(57) A silicon-carbon-containing electrode material according to embodiments of the present disclosure includes a porous carbon structure including pores and a silicon-containing coating layer formed on the porous carbon structure, wherein the peak intensity ratio of the Raman spectrum, expressed as a percentage and as defined by a predetermined equation, is 3% to 18%. Accordingly, the cycle life and capacity characteristics of a lithium secondary battery may be improved.

[FIG. 1]

# EP 4 738 463 A1

**Description**

BACKGROUND

1. Field of the Invention

The disclosure of the present application relates to a silicon-carbon-containing electrode material, a method of manufacturing the same, and a lithium secondary battery including the silicon-carbon-containing electrode material. More specifically, the present disclosure relates to a silicon-carbon-containing electrode material including a porous carbon structure and a lithium secondary battery including the silicon-carbon-containing electrode material.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickelcadmium battery, and a nickel-hydrogen battery. Among these, the lithium secondary batteries have a high operating voltage, a high energy density per unit weight, and are advantageous in terms of charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

To manufacture lithium secondary batteries with higher capacity and output, silicon and carbon may be composited and used as an anode material. For example, silicon may improve the capacity characteristics of the battery, and carbon may serve as a support for silicon.

SUMMARY

An object of the present disclosure is to provide a silicon-carbon-containing electrode material having improved cycle life and capacity characteristics.

Another object of the present disclosure is to provide a method for manufacturing the silicon-carbon-containing electrode material.

Still another object of the present disclosure is to provide a lithium secondary battery having improved cycle life and capacity characteristics.

A silicon-carbon-containing electrode material according to exemplary embodiments includes: a porous carbon structure including pores; and a silicon-containing coating layer formed on the porous carbon structure. The peak intensity ratio of the Raman spectrum, expressed as a percentage and as defined by Equation 1 below, measured from the silicon-carbon-containing electrode material, may be 3% to 18%.

[Equation 1]

$$\text{Peak intensity ratio of Raman spectrum } (\%) = (I_B / I_A) \times 100$$

In Equation 1, $I_A$ may represent the maximum peak intensity at 2500 cm$^{-1}$ to 3000 cm$^{-1}$ when the wavenumber range of 2300 cm$^{-1}$ to 3120 cm$^{-1}$ of the Raman spectrum is used as the baseline, and $I_B$ may represent the maximum peak intensity at 2080 cm$^{-1}$ to 2120 cm$^{-1}$ when the wavenumber range of 1850 cm$^{-1}$ to 2200 cm$^{-1}$ of the Raman spectrum is used as the baseline.

In some embodiments, the peak intensity ratio of the Raman spectrum expressed as a percentage may be 4% to 15%.

In some embodiments, the peak intensity ratio of the Raman spectrum expressed as a percentage may be 4.73% to 13.85%.

In some embodiments, the content of silicon based on the total weight of the electrode material may be 38% by weight to 60% by weight.

In some embodiments, the content of silicon based on the total weight of the electrode material may be 45% by weight to 55% by weight.

In some embodiments, the content of silicon based on the total weight of the electrode material may be 35.9% by weight to 49.3% by weight.

In a method for manufacturing a silicon-carbon-containing electrode material, a porous carbon structure including pores may be prepared. A silicon source gas may be supplied onto the porous carbon structure in a reactor to form a silicon-containing coating layer on the porous carbon structure. The pressure within the reactor may be reduced to a range of 1 Torr to 250 Torr to obtain a silicon-carbon-containing electrode material.

In some embodiments, the peak intensity ratio of the Raman spectrum, expressed as a percentage and as defined by Equation 1 below, measured from the silicon-carbon-containing electrode material, may be 3% to 18%:

$$[\text{Equation 1}]$$

$$\text{Peak intensity ratio of Raman spectrum } (\%) = (I_B / I_A) \times 100$$

In Equation 1, $I_A$ may represent the maximum peak intensity at 2500 $cm^{-1}$ to 3000 $cm^{-1}$ when the wavenumber range of 2300 $cm^{-1}$ to 3120 $cm^{-1}$ of the Raman spectrum is used as the baseline, and $I_B$ may represent the maximum peak intensity at 2080 $cm^{-1}$ to 2120 $cm^{-1}$ when the wavenumber range of 1850 $cm^{-1}$ to 2200 $cm^{-1}$ of the Raman spectrum is used as the baseline.

In some embodiments, the supply of the silicon source gas may be performed at a temperature of 300 °C to 600 °C.

In some embodiments, the supply of the silicon source gas may be performed for 2 to 8 hours.

In some embodiments, the silicon source gas may be a gas mixture of silane gas and a non-reactive gas.

In some embodiments, the depressurization may be performed at a temperature of 200 °C to 600 °C.

In some embodiments, the depressurization may be performed for 0.5 hours to 3.5 hours.

In some embodiments, the depressurization may be performed under a non-reactive gas atmosphere.

A lithium secondary battery according to exemplary embodiments may include: an anode including the silicon-carbon-containing electrode material according to the above-described embodiments; and a cathode disposed opposite to the anode.

The silicon-carbon-containing electrode material according to exemplary embodiments may include a porous carbon structure and a silicon-containing coating layer formed on the porous carbon structure.

The peak intensity ratio of the Raman spectrum, expressed as a percentage and as defined by a predetermined equation, measured from the silicon-carbon-containing electrode material, may be 3% to 18%. Accordingly, an appropriate amount of unreacted species ($SiH_x$) of silane ($SiH_4$) gas may be present in the porous carbon structure, thereby improving the cycle life and output characteristics of a lithium secondary battery.

The electrode material may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and other advantages of the present disclosure will be more clearly understood from the following detailed description taken in conjunction with the accompanying drawings, in which:

FIGS. 1 and 2 are schematic plan and cross-sectional views, respectively, of a lithium secondary battery according to exemplary embodiments;

FIG. 3 is a flowchart illustrating a method for manufacturing a silicon-carbon-containing electrode material according to exemplary embodiments;

FIGS. 4A to 4D are graphs illustrating Raman spectra of silicon-carbon-containing electrode materials according to Examples 2 and 3, and Comparative Examples 1 and 2, respectively;

FIG. 5A is a graph illustrating Raman spectra of silicon-carbon-containing electrode materials according to Examples 2 and 3, and Comparative Examples 1 and 2; and

FIG. 5B is a graph illustrating Raman spectra of silicon-carbon-containing electrode materials according to Examples 2 and 3, and Comparative Examples 1 and 2, enlarged in a specific region.

DETAILED DESCRIPTION

Embodiments of the present disclosure provide a silicon-carbon-containing electrode material including a porous carbon structure and a silicon-containing coating layer formed on the porous carbon structure. An anode for a lithium secondary battery including the electrode material and a lithium secondary battery including the anode may be provided.

According to exemplary embodiments, the electrode material may be used as an anode material for a lithium secondary battery. The use of the electrode material is not limited to the anode material and may also serve as a material having conductivity or charge storage properties in various electrical, electronic, and electrochemical devices.

Hereinafter, embodiments of the present disclosure will be described in detail with reference to the drawings. However, the embodiments are merely illustrative, and the present disclosure is not limited to the specific embodiments described as examples.

### <Silicon-carbon-containing electrode material>

The silicon-carbon-containing electrode material according to exemplary embodiments may include a porous carbon structure and a silicon-containing coating layer formed on the porous carbon structure.

In some embodiments, the porous carbon structure may include a carbonized polymer, for example, the porous carbon structure may include at least one selected from the group consisting of activated carbon, carbon nanotubes (CNTs), carbon nanowires, graphene, carbon fibers, carbon black, graphite, micro/meso/macro porous carbon, pyrolyzed cryogel, pyrolyzed xerogel, and pyrolyzed aerogel.

For example, the cross-section of the porous carbon structure may be circular or may be randomly varied from the circular shape.

According to exemplary embodiments, the silicon-containing coating layer may be partially formed on the internal pores and the surface of the porous carbon structure. The silicon-containing coating layer may be formed simultaneously on the internal pores and the surface of the porous carbon structure.

In some embodiments, the above-described pores of the porous carbon structure may be at least partially filled by the silicon-containing coating layer. For example, the pores may be completely filled or partially filled by the silicon-containing coating layer.

When the pores are partially filled by the silicon-containing coating layer, the internal space of the pores may further include a residual space excluding the portion filled by the silicon-containing coating layer.

In some embodiments, the silicon-containing coating layer may be formed through a deposition process, such as a chemical vapor deposition (CVD) process or a vacuum thermal evaporation process.

In some embodiments, a silicon precursor, such as silane gas ($SiH_4$), may be supplied to the porous carbon structure having the above-described pores. Silicon grains separated from the silicon precursor may be deposited onto the porous carbon structure, thereby forming the silicon-containing coating layer.

In some embodiments, the formed silicon-containing coating layer may contain unreacted species (e.g., $SiH_x$). For example, if the silane gas is incompletely decomposed, unreacted species ($SiH_x$) derived from silane gas may be formed on the porous carbon structure. If the amount of unreacted species increases excessively, the instability of the anode active material may increase during repeated charging and discharging, leading to a decrease in cycle life characteristics due to gas generation. Furthermore, side reactions may occur during the lithium intercalation reaction. However, when the unreacted species are present in an appropriate amount, the electronic conductivity and reactivity with Li of the silicon-containing coating layer may be improved.

In some embodiments, the content of silicon based on the total weight of the electrode material may be 38% by weight ("wt%") to 60 wt%. In some embodiments, the content of silicon based on the total weight of the electrode material may be 45 wt% to 55 wt%, 45 wt% to 50 wt%, 48 wt% to 55 wt%, 49 wt% to 53 wt%, or 35.9 wt% to 49.3 wt%.

Within the above range, the porous carbon structure may include sufficient pores to suppress volume expansion of silicon, while inhibiting electrolyte penetration into the pores of the porous carbon structure. Accordingly, the cycle life characteristics of the lithium secondary battery may be improved.

According to exemplary embodiments, the peak intensity ratio of the Raman spectrum, expressed as a percentage and as defined by Equation 1 below, measured from the electrode material, may be 3% to 18%.

[Equation 1]

$$\text{Peak intensity ratio of Raman spectrum (\%)} = (I_B \,/\, I_A) \times 100$$

In Equation 1, $I_A$ may represent the maximum peak intensity at 2500 cm$^{-1}$ to 3000 cm$^{-1}$ when the wavenumber range of 2300 cm$^{-1}$ to 3120 cm$^{-1}$ of the Raman spectrum is used as the baseline, and $I_B$ may represent the maximum peak intensity at 2080 cm$^{-1}$ to 2120 cm$^{-1}$ when the wavenumber range of 1850 cm$^{-1}$ to 2200 cm$^{-1}$ of the Raman spectrum is used as the baseline.

For example, in Equation 1, $I_A$ may represent the maximum peak intensity in the 2D band of carbon included in the porous carbon structure, and $I_B$ may represent the maximum peak intensity for the Si-H bond of the above-described unreacted species ($SiH_x$) derived from silane gas, and the peak intensity ratio of the Raman spectrum expressed as a percentage may indicate the degree of formation of the unreacted species.

For example, if the peak intensity ratio of the Raman spectrum expressed as a percentage exceeds 18%, the amount of unreacted species on the porous carbon structure may excessively increase, and side reactions caused by the Si-H bond of the unreacted species may occur when lithium ions are absorbed into the anode. Consequently, the cycle life characteristics of the lithium secondary battery may deteriorate.

For example, if the peak intensity ratio of the Raman spectrum expressed as a percentage is less than 3%, the amount of unreacted species on the porous carbon structure may excessively decrease, and the electronic conductivity of the electrode material may decrease. Consequently, the cycle life characteristics of the lithium secondary battery may deteriorate.

In some embodiments, the peak intensity ratio of the Raman spectrum expressed as a percentage may be 4% to 15%. In some embodiments, the peak intensity ratio of the Raman spectrum expressed as a percentage may be 4% to 14%, 5% to 14%, or 6% to 10%. In some embodiments, the peak intensity ratio of the Raman spectrum expressed as a percentage may be 4.73% to 13.85%.

Within the above range, an appropriate amount of the unreacted species may be formed on the porous carbon structure, and the cycle life characteristics of the lithium secondary battery may be improved.

The Raman spectroscopy analysis may be performed using a Raman spectrometer known in the art (e.g., Renishaw inVia Raman microscope). For example, the laser wavelength of the Raman spectrometer may be, for example, about 532 nm to about 785 nm, the laser output may be about 0.01 mW to about 0.5 mW, the laser exposure time may be about 5 s to about 20 s, and the number of scans may be 5 to 20. For example, a charge-coupled device (CCD) (e.g., a 1024 StreamLine CCD array detector) may be used as the detector of the Raman spectrometer.

For example, the Raman spectroscopy analysis may be performed at 20 to 50 points selected with a 50× lens magnification over a range of 1800 cm$^{-1}$ to 3200 cm$^{-1}$.

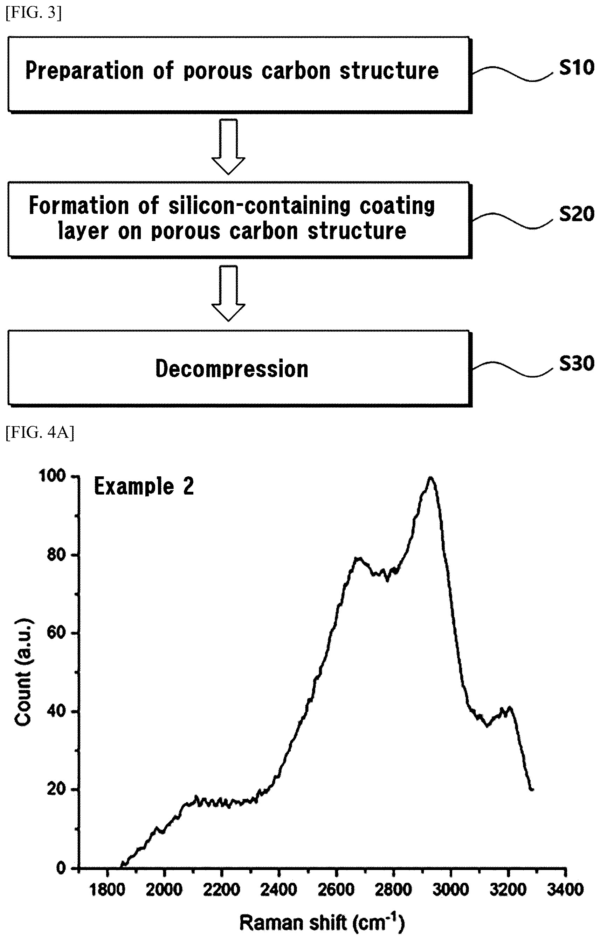

FIG. 3 is a flowchart illustrating a method for manufacturing a silicon-carbon-containing electrode material according to exemplary embodiments.

Referring to FIG. 3, a porous carbon structure including pores may be prepared (e.g., step S10).

In some embodiments, the porous carbon structure may be prepared from a resol oligomer formed by mixing an aromatic compound containing a hydroxyl group and an aldehyde compound.

For example, the aromatic compound containing a hydroxyl group may be phenol, and the aldehyde compound may be formaldehyde. For example, the prepared resol oligomer may include divinylbenzene.

According to exemplary embodiments, the porous carbon structure may be activated. This activation may control the activity of the pore structure of the porous carbon structure.

For example, the activation may be performed by a physical activation method that includes introducing a reactive gas (steam, carbon dioxide, an inert gas, or a mixture of gases thereof) and heat-treating at a temperature of 700 °C to 1,000 °C.

For example, the activation may be performed by a chemical activation method that uses acidic or basic chemicals such as KOH, $Na_2CO_3$, NaOH, or $H_3PO_4$ as activators and is conducted at a lower temperature than the physical activation method.

According to exemplary embodiments, the activation may be performed for 2 h or more. For example, the activation may be performed for 2 h or more and 5 h or less.

According to exemplary embodiments, the porous carbon structure manufactured through the activation may have a pore size of 20 nm or less, or 1 nm to 20 nm.

According to exemplary embodiments, the porous carbon structure manufactured through the activation process may have a specific surface area of 100 m$^2$/g to 2,000 m$^2$/g, or 1,000 m$^2$/g to 2,000 m$^2$/g.

Within the above specific surface area range, silicon and additional elements may be formed on the surface of the porous carbon structure with a controlled ratio.

According to exemplary embodiments, a silicon-containing coating layer may be formed on the porous carbon structure (e.g., step S20).

For example, a silicon source gas may be supplied onto the porous carbon structure in a reactor to form a silicon-containing coating layer on the porous carbon structure. For example, the silicon-containing coating layer may be formed through chemical vapor deposition (CVD) or physical vapor deposition (PVD).

In some embodiments, the silicon source gas may be a mixture of silane gas and a non-reactive gas. For example, the silicon source gas may include silane gas.

In some embodiments, the non-reactive gas may include at least one selected from the group consisting of helium gas, nitrogen gas, neon gas, argon gas, krypton gas, and xenon gas. For example, the non-reactive gas may be nitrogen gas.

In some embodiments, the supply of the silicon source gas may be performed at a temperature of 300 °C to 600 °C. In some embodiments, the supply of the silicon source gas may be performed at a temperature range of 350 °C to 580 °C, 380 °C to 570 °C, or 400 °C to 550 °C.

In some embodiments, the supply of the silicon source gas may be performed at a pressure range of 600 Torr to 760 Torr. In some embodiments, the supply of the silicon source gas may be performed at a pressure range of 650 Torr to 760 Torr, or 740 Torr to 760 Torr.

Within the above supply temperature and pressure range of the silicon source gas, the content of silicon based on the total weight of the electrode material may be readily controlled within the above-described range.

In some embodiments, the supply of the silicon source gas may be performed for 2 to 8 h. In some embodiments, the supply of the silicon source gas may be performed for 2.5 to 7.5 h, 3 to 5.5 h, or 3 to 4 h. Within the above time ranges, the electrode material may include an appropriate amount of silicon, thereby improving the cycle life and capacity characteristics of the battery.

According to exemplary embodiments, the internal pressure of the reactor may be reduced (e.g., step S30).

For example, the pressure within the reactor may be reduced to a range of 1 to 250 Torr, or 10 to 150 Torr to obtain a silicon-carbon-containing electrode material. For example, when the depressurization is performed, the unreacted species ($SiH_x$) derived from silane gas may be volatilized, and the peak intensity ratio of the Raman spectrum expressed as a percentage within the above-described range may be easily ensured.

In some embodiments, the pressure within the reactor may be reduced to a range of 30 to 140 Torr, 50 to 130 Torr, or 80 to 120 Torr. Within this range, the amount of the unreacted species ($SiH_x$) derived from silane gas may be readily controlled.

In some embodiments, the depressurization may be performed at a temperature of 200 °C to 600 °C. In some embodiments, the depressurization may be performed at a temperature of 220 °C to 500 °C, 250 °C to 400 °C, or 250 °C to 350 °C.

In some embodiments, the depressurization may be performed under a non-reactive gas atmosphere. For example, the porous carbon structure having the silicon-containing coating layer formed thereon may be introduced into a reactor, and a non-reactive gas may be supplied to the reactor to replace the gas atmosphere.

In some embodiments, the non-reactive gas may include at least one selected from the group consisting of helium gas, nitrogen gas, neon gas, argon gas, krypton gas, and xenon gas. For example, the non-reactive gas may be nitrogen gas.

In some embodiments, during the depressurization, substantially no hydrogen gas and/or silane gas may be supplied to the reactor. This allows unreacted species to be discharged, thereby achieving the peak intensity ratio of the Raman spectrum expressed as a percentage within the above-described range.

In some embodiments, the depressurization may be performed for 0.5 to 3.5 h. In some embodiments, the depressurization may be performed for 1 to 3.5 h, 0.5 to 3 h, 1 to 3 h, 1 to 2 h, or 1.5 to 2.5 h.

Within the above-described depressurization time range, the amount of unreacted species ($SiH_x$) derived from silane gas may be appropriately controlled, thereby easily ensuring the peak intensity ratio of the Raman spectrum expressed as a percentage within the above-described range. Consequently, the cycle life and output characteristics of the lithium secondary battery may be improved.

In some embodiments, a carbon coating may be further formed on the silicon-containing coating layer. The carbon coating may be formed through deposition using a gas such as methane or solution coating using a monomer or polymer solution.

In one embodiment, the carbon coating may include a polymer with enhanced elastic properties, such as an acrylonitrile-based polymer, or may include a conductive polymer, such as polypyrrole, polyaniline, polythiophene, or poly(3,4-ethylenedioxythiophene).

In one embodiment, a carbon coating may be formed by high-temperature decomposition or polymerization of a hydrocarbon precursor, such as an alkane (e.g., methane, ethane, or propane), an alkene (e.g., ethylene or propylene), or an alkyne (e.g., acetylene), under an inert gas or an oxygen-free atmosphere.

The properties (e.g., Raman characteristics) of the electrode material according to embodiments of the present disclosure do not necessarily depend on the above-described manufacturing methods and conditions. For example, the above-described peak intensity ratio of the Raman spectrum expressed as a percentage may vary depending on other factors, including the type and individual properties of the porous carbon structure and silicon source gas, silicon deposition conditions and the like.

### <Lithium secondary battery>

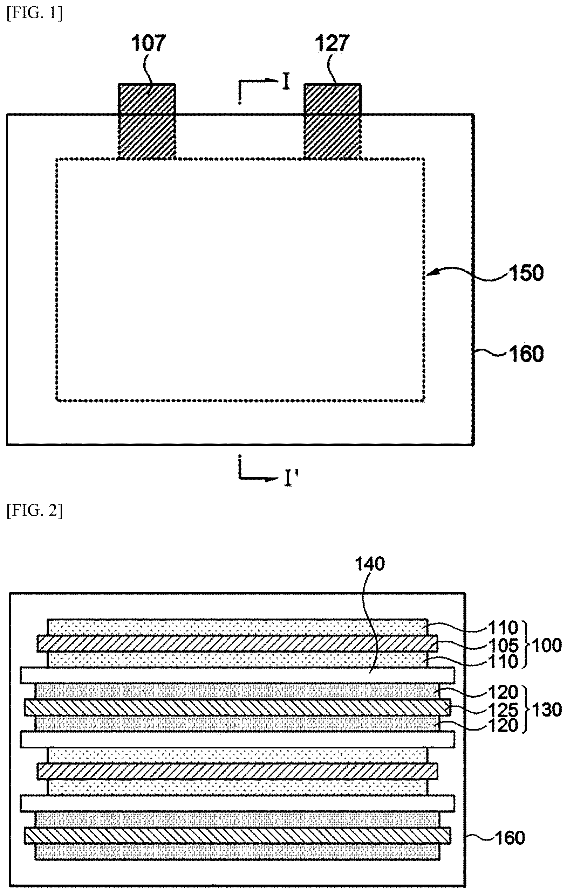

FIGS. 1 and 2 are schematic plan and cross-sectional views, respectively, illustrating a lithium secondary battery according to exemplary embodiments. FIG. 2 is a cross-sectional view taken along line I-I' of FIG. 1.

Referring to FIGS. 1 and 2, the lithium secondary battery may include an electrode assembly including a cathode 100 and an anode 130. The electrode assembly 150 may further include a separator 140 interposed between the cathode 100 and the anode 130. The electrode assembly 150 may be accommodated in a case 160 together with an electrolyte solution including an electrolyte, and may be impregnated with the electrolyte.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector may have a thickness of 10 $\mu$m to 50 $\mu$m, but is not limited thereto.

For example, the cathode active material may include a compound capable of reversibly intercalating and deintercalating lithium ions.

For example, the cathode active material may include a lithium metal oxide including a metal element such as nickel, cobalt, manganese, and aluminum.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

$$[\text{Formula 1}] \qquad \text{Li}_x\text{Ni}_a\text{M}_b\text{O}_{2+z}$$

In Formula 1, x, a, b and z may satisfy $0.9 \le x \le 1.2$, $0.6 \le a \le 0.99$, $0.01 \le b \le 0.4$, and $-0.5 \le z \le 0.1$. As described above, M may include Co, Mn and/or Al.

The chemical structure represented by Formula 1 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

$$[\text{Formula 1-1}] \qquad \text{Li}_x\text{Ni}_a\text{M1}_{b1}\text{M2}_{b2}\text{O}_{2+z}$$

In Formula 1-1, M1 may include Co, Mn and/or Al. M2 may include the above-described auxiliary elements. In Formula 1-1, x, a, b1, b2 and z may satisfy $0.9 \le x \le 1.2$, $0.6 \le a \le 0.99$, $0.01 \le b1+b2 \le 0.4$, and $-0.5 \le z \le 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having an increased content of nickel may be used.

Nickel may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a lithium (Li)-rich layered oxide (LLO)/over-lithiated oxide (OLO)-based active material, a manganese (Mn)-rich active material, or a cobalt (Co)-less active material, which have a chemical structure or a crystal structure represented by Formula 2 below.

$$[\text{Formula 2}] \qquad p[Li_2MnO_3]\cdot(1\text{-}p)[LiqJO_2]$$

In Formula 2, p and q may satisfy $0<p<l$, and $0.9 \leq q \leq 1.2$, and J may include at least one element selected from Mn, Ni, Co, Fe, Cr, V, Cu, Zn, Ti, Al, Mg and B.

For example, the cathode active material may be dispersed in a solvent to prepare a cathode slurry. The cathode slurry may be coated on the cathode current collector 105, and then dried and roll-pressed to fabricate the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally may further include a conductive material, a thickener and the like.

Non-limiting examples of solvents used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode slurry layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers; and/or metal-based conductive materials such as tin, tin oxide, and titanium oxide; and perovskite materials such as $LaSrCoO_3$, and $LaSrMnO_3$.

As the thickener, for example, carboxymethyl cellulose (CMC) may be used.

The anode 130 may include an anode current collector 125 and an anode active material layer 120 on the anode current collector 125.

For example, the anode active material layer 120 may include an anode active material and an anode binder, and may further include a conductive material.

For example, the anode 130 may be fabricated by mixing and stirring the anode active material, the anode binder, and the conductive material in a solvent to prepare an anode slurry, and then coating the anode slurry on the anode current collector 125, followed by drying and roll-pressing.

The coating process may be performed using methods such as gravure coating, slot die coating, simultaneous multilayer die coating, imprinting, doctor blade coating, dip coating, bar coating or casting, etc., but is not limited thereto.

For example, the anode current collector 125 may include gold, stainless steel, nickel, aluminum, titanium, copper, or an alloy thereof, and may include copper or a copper alloy, for example. The anode current collector may have a thickness of, for example, 10 $\mu$m to 50 $\mu$m, but is not limited thereto.

For example, the anode active material layer 120 may include the silicon-carbon-containing electrode material according to the above-described exemplary embodiments as the anode active material. In some embodiments, the anode active material may further include a graphite-based active material, such as artificial graphite or natural graphite.

In some embodiments, the content of the silicon-carbon-containing electrode material according to the above-described exemplary embodiments, based on the total weight of the anode active material included in the anode active material layer 120, may be 5 wt% to 40 wt%, 10 wt% to 30 wt%, 10 wt% to 20 wt%, or 15 wt% to 20 wt%.

In some embodiments, the content of the graphite-based active material, based on the total weight of the anode active material included in the anode active material layer 120, may be 60 wt% to 95 wt%, 65 wt% to 90 wt%, 70 wt% to 85 wt%, or 75 wt% or 80 wt%.

In one embodiment, the anode active material included in the anode active material layer 120 may consist of the silicon-carbon-containing electrode material according to the above-described exemplary embodiments. Accordingly, the initial efficiency, capacity characteristics, and cycle life characteristics of the lithium secondary battery may be improved.

For example, the content of the anode active material included in the anode active material layer 120 may be 60 wt% to 99 wt% based on the total weight of the anode active material layer 120, for example, 70 wt% to 98 wt%, or 80 wt% to 98 wt%.

Non-limiting examples of the solvent for an anode slurry may include water, pure water, deionized water, distilled water, ethanol, isopropanol, methanol, acetone, n-propanol, t-butanol and the like.

The anode binder and conductive material may be substantially the same as or similar to the above-described cathode binder and conductive material.

For example, the anode binder may include a styrene-butadiene rubber (SBR)-based binder, a polyacrylic acid (PAA)-based binder, or a poly(3,4-ethylenedioxythiophene) (PEDOT)-based binder, and may be used together with a thickener such as carboxymethyl cellulose (CMC).

In one embodiment, the separator 140 may be interposed between the cathode 100 and the anode 130. The separator may prevent an electrical short-circuit between the cathode and the anode, and maintain flow of ions. According to an embodiment, the separator may have a thickness of 10 $\mu$m to 20 $\mu$m, but in the present disclosure, it is not limited thereto.

For example, the separator 140 may include a porous polymer film made of a polyolefin polymer, such as an ethylene polymer, a propylene polymer, an ethylene/butene copolymer, an ethylene/hexene copolymer, and an ethylene/methacrylate copolymer, etc.

For example, the separator 140 may include a nonwoven fabric formed of glass fibers having a high melting point, polyethylene terephthalate fibers and the like.

For example, an electrode cell may be formed by including the cathode 100, the anode 130 and the separator 140. In addition, a plurality of electrode cells may be stacked to form an electrode assembly 150. For example, the electrode assembly 150 may be formed by winding, stacking, z-folding, or stack-folding the separator 140.

The electrode assembly 150 may be accommodated in the case 160 together with the electrolyte to define a lithium secondary battery. According to exemplary embodiments, a non-aqueous electrolyte may be used as the electrolyte.

The non-aqueous electrolyte may include a lithium salt and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility in the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

As shown in FIG. 1, electrode tabs (cathode tabs and anode tabs) may protrude from the cathode current collector 105 and the anode current collector 125, respectively, which belong to each electrode cell, and may extend to one side of the case 160. The electrode tabs may be welded together with the one side of the case and connected to electrode leads (a cathode lead 107 and an anode lead 127) that extend to the outside of the case 160.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

## Example 1

### (1) Preparation of silicon-carbon-containing electrode material

### Preparation of porous carbon structure

Phenol and formaldehyde were mixed in a 1:2 molar ratio, and 1.5 wt% triethylamine was added. The mixture was reacted at 85 °C for 4 h with stirring at 160 rpm to synthesize a resol oligomer. A dispersion prepared by dispersing 1 g of polyvinyl alcohol (PVA) in an aqueous medium was added to the resol oligomer to stabilize the suspension.

Subsequently, 3 g of hexamethylenetetramine (HMTA) as a curing agent was added and the mixture was reacted at 98 °C for 12 h with stirring at 400 rpm to cure the resol oligomer. The cured resol oligomer was classified using a sieve and washed with water ($H_2O$). The unreacted monomers and oligomers were removed from the washed resol oligomer using ethanol and dried.

The dried resol oligomer was calcined at 800 °C for 3 h under a nitrogen atmosphere to prepare porous carbon structure. In this case, steam was introduced to activate the porous carbon-based structure particles. The average pore size of the produced porous carbon structure was adjusted to 1 nm to 20 nm, and the specific surface area was adjusted to 1,000 $m^2$/g to 2,000 $m^2$/g.

### Formation of silicon-containing coating layer

The prepared porous carbon structure was placed in a CVD chamber, and a gas mixture of silane gas ($SiH_4$) and nitrogen gas ($N_2$) was supplied at a flow rate of 2 L/min for 4 h under conditions of 550 °C and 760 Torr, thereby forming a silicon-containing coating layer.

### Depressurization process

Nitrogen gas ($N_2$) was supplied to the silicon-deposited porous carbon structure to replace the chamber atmosphere with nitrogen, and the chamber was then maintained at 300 °C and 100 Torr for 1 h, thereby producing a silicon-carbon-containing electrode material.

### (2) Fabrication of anode

An anode active material slurry was obtained by mixing 95.5 wt% of a mixture including 15 wt% of the silicon-carbon-containing electrode material prepared as described above and 80.5 wt% of artificial graphite as anode active materials, 0.5 wt% of carbon nanotubes (CNTs) (flake-type conductive material) as a conductive material, 2.5 wt% of styrene-butadiene rubber (SBR) as a binder, and 1.5 wt% of carboxymethyl cellulose (CMC) as a thickener. The anode active material slurry was coated onto a copper substrate, and then dried and roll-pressed to fabricate an anode.

### (3) Manufacture of lithium secondary battery

A cathode slurry was prepared by mixing and dispersing a cathode active material ($Li[Ni_{0.88}Co_{0.06}Mn_{0.06}]O_2$), carbon black as a conductive material, and polyvinylidene fluoride (PVdF) as a binder in a weight ratio of 92:5:3 in N-methyl-2-pyrrolidone (NMP).

The cathode slurry was uniformly applied to an aluminum foil (thickness: 15 μm) having a protrusion part (a cathode tab) on one side, excluding the protrusion part, and then dried and roll-pressed to fabricate a cathode.

A polyethylene separator (thickness: 13 μm) was interposed between the cathode and the anode fabricated as above to form an electrode assembly. Then, a cathode lead and an anode lead were welded and connected to the cathode tab and an anode tab, respectively.

The electrode assembly was placed in a pouch (case) so that some regions of the cathode lead and anode lead were exposed to the outside, and three sides of the pouch were sealed, leaving one side as an electrolyte injection region.

An electrolyte was prepared by dissolving 1 M $LiPF_6$ in a mixed solvent of EC/EMC (3:7; volume ratio), and adding 2% by volume of FEC based on the total volume of the electrolyte. The electrolyte was injected into the pouch, and the electrolyte-injection side was sealed, followed by impregnation for 12 h to manufacture a lithium secondary battery sample.

## Example 2

A silicon-carbon-containing electrode material and a lithium secondary battery were manufactured in the same manner as in Example 1, except that the holding time in the depressurization process was changed from 1 h to 2 h.

## Example 3

A silicon-carbon-containing electrode material and a lithium secondary battery were manufactured in the same manner as in Example 1, except that the holding time in the depressurization process was changed from 1 h to 3 h.

## Example 4

A silicon-carbon-containing electrode material and a lithium secondary battery were manufactured in the same manner as in Example 1, except that the deposition time during the formation of the silicon-containing coating layer was changed from 4 h to 1 h.

## Comparative Example 1

A lithium secondary battery was manufactured in the same manner as in Example 1, except that the depressurization process was omitted and a silicon-carbon-containing electrode material having a silicon-containing coating layer formed on a porous carbon structure was used.

## Comparative Example 2

A silicon-carbon-containing electrode material and a lithium secondary battery were manufactured in the same manner as in Example 1, except that the holding time in the depressurization process was changed from 1 h to 6 h.

## Comparative Example 3

A silicon-carbon-containing electrode material and a lithium secondary battery were manufactured in the same manner as in Example 1, except that the pressure in the depressurization process was changed to 750 Torr.

## Comparative Example 4

A silicon-carbon-containing electrode material and a lithium secondary battery were manufactured in the same manner as in Example 1, except that the pressure in the depressurization process was changed to 380 Torr.

The physical properties of the silicon-carbon-containing electrode materials prepared according to the examples and comparative examples were measured and evaluated as follows.

## (4) Measurement of content of silicon in silicon-carbon-containing electrode material

The silicon-carbon-containing electrode materials according to the examples or comparative examples, nitric acid, and a small amount of hydrofluoric acid were added to polypropylene (PP) tubes and sealed with screw caps. The PP tubes were shaken well and left at room temperature to dissolve the samples. After dissolution of the silicon-carbon-containing electrode material, the PP tubes were refrigerated to cool the solution including the silicon-carbon-containing electrode material. A saturated boric acid water was then added to the cooled solution including silicon-carbon-containing electrode material to neutralize hydrofluoric acid, followed by dilution with ultrapure water. Carbon remaining in solution including the silicon-carbon-containing electrode material was removed using a 0.45 $\mu$m syringe filter to obtain the sample solution.

The obtained sample solution was placed in an ICP analysis device (NexION 350S, PerkinElmer) to measure the weight of silicon and additional elements.

Specifically, high-temperature (about 10,000 K) argon (Ar) plasma was generated by radio-frequency (RF) induction, and the aerosolized sample was introduced; the resulting positive ions were separated by mass-to-charge (m/z) ratio, and the signal intensity for each ion was detected. The conditions of the ICP analyzer are as follows:

**[0167]** - RF generator: 40 MHz free-running ICP source / Quadruple-stage vacuum system / Detector: Quadruple ion detector

### (5) Measurement of peak intensity ratio of the Raman spectrum expressed as a percentage

Raman spectra were measured in the range of 1800 $cm^{-1}$ to 3200 $cm^{-1}$ for the silicon-carbon-containing electrode materials according to the above-described examples and comparative examples using a 532 nm laser Raman spectrometer.

In the obtained Raman spectra, the maximum peak intensity ($I_A$) in the range of 2500 $cm^{-1}$ to 3000 $cm^{-1}$, with the wavenumber range of 2300 $cm^{-1}$ to 3120 $cm^{-1}$ used as the baseline, and the maximum peak intensity ($I_B$) in the range of 2080 $cm^{-1}$ to 2120 $cm^{-1}$, with the wavenumber range of 1850 $cm^{-1}$ to 2200 $cm^{-1}$ used as the baseline, were measured. The measured peak intensities were applied to Equation 1 to calculate the peak intensity ratio of the Raman spectrum expressed as a percentage.

[Equation 1]

$$\text{Peak intensity ratio of Raman spectrum (\%)} = (I_B / I_A) \times 100$$

The specific Raman spectroscopy measurement conditions are as follows:

i) Equipment: Renishaw inVia Raman spectrometer
ii) Wavelength and intensity: 532 nm, 0.01 to 0.5 mW
iii) Exposure time and number of scans: 5 to 20 s, 5 to 20 scans
iv) Grating: 1800 L/mm
v) Detector: 1024 StreamLine CCD array detector
vi) Objective: 50$\times$

The processing conditions for the data measured using the Raman spectra are as follows:

i) Data processing software: Resolutions Pro
ii) Baseline setting range for measurement of the peak intensity ratio of the Raman spectrum expressed as a percentage

- Peak in the wavenumber range of 2500 $cm^{-1}$ to 3000 $cm^{-1}$: baseline 2300 $cm^{-1}$ to 3120 $cm^{-1}$
- Peak in the wavenumber range of 2080 $cm^{-1}$ to 2120 $cm^{-1}$: baseline 1850 $cm^{-1}$ to 2200 $cm^{-1}$

At this time, the measurement was performed under conditions where the peak intensity in the wavenumber range of 2500 $cm^{-1}$ to 3000 $cm^{-1}$ was 500 or more, and the peak intensity in the wavenumber range of 2080 $cm^{-1}$ to 2120 $cm^{-1}$ was 50 or more.

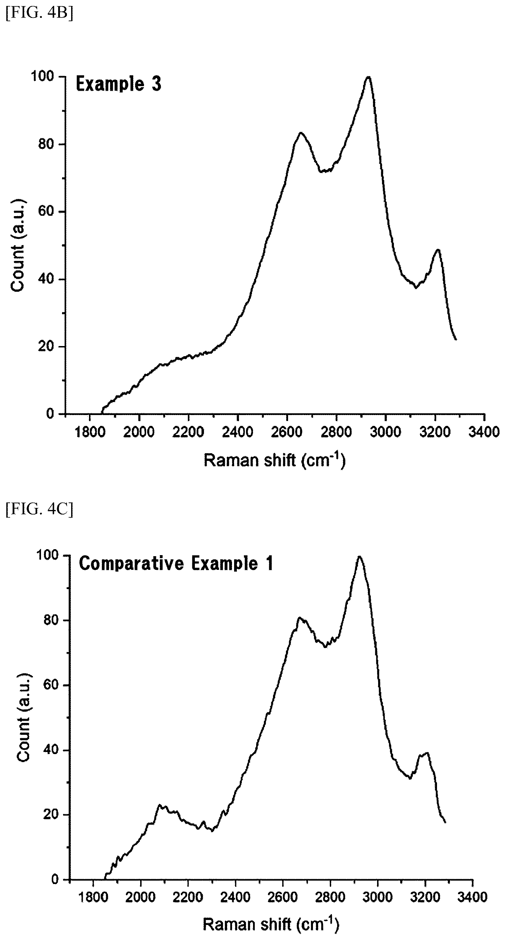

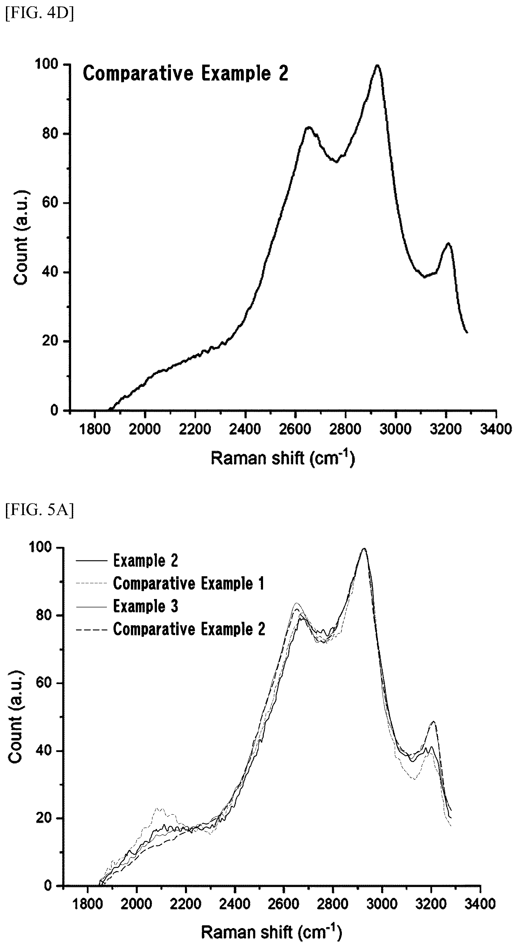

Graphs showing the Raman spectra of the silicon-carbon-containing electrode materials according to Examples 2 and 3 and Comparative Examples 1 and 2, measured according to the above-described method, are illustrated in FIGS. 4A to 4D, respectively.

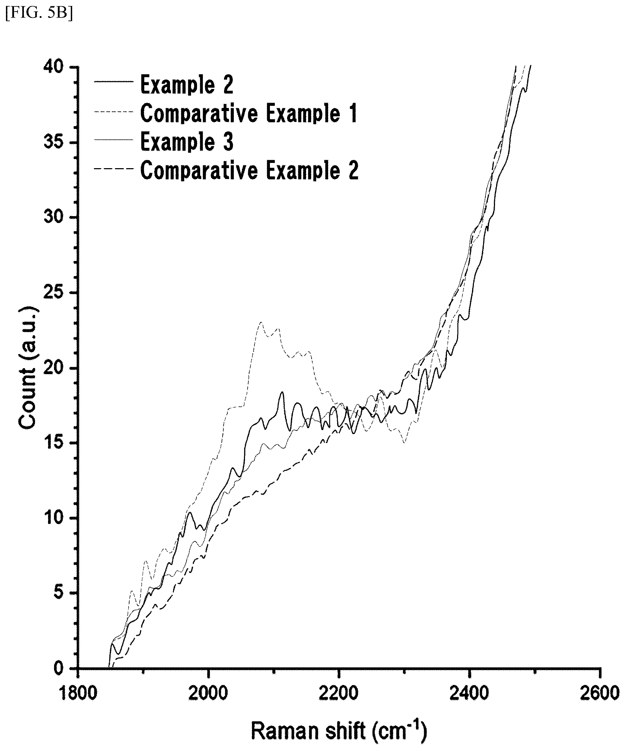

For the convenience of peak intensity comparison, a graph collectively showing the Raman spectra of the silicon-carbon-containing electrode materials according to Examples 2 and 3 and Comparative Examples 1 and 2 is also illustrated in FIG. 5A. An enlarged view of a selected region of the graph in FIG. 5A is illustrated in FIG. 5B.

The manufacturing conditions and property evaluation results of the silicon-carbon-containing electrode materials prepared according to the examples and comparative examples are shown in Table 1 below.

[TABLE 1]

| | Deposition time during the formation of silicon-containing coating layer (h) | Pressure in depressurization process (Torr) | Holding time in depressurization process (h) | Silicon content of silicon-carbon-containing electrode material (wt%) | Peak intensity ratio of Raman spectrum (%) |
|---|---|---|---|---|---|
| Example 1 | 4 | 100 | 1 | 49.3 | 13.85 |
| Example 2 | 4 | 100 | 2 | 49.2 | 7.94 |
| Example 3 | 4 | 100 | 3 | 49.1 | 4.73 |
| Example 4 | 1 | 100 | 2 | 35.9 | 6.83 |
| Comparative Example 1 | 4 | - | - | 49.3 | 20.34 |
| Comparative Example 2 | 4 | 100 | 6 | 48.8 | 2.87 |
| Comparative Example 3 | 4 | 750 | 2 | 49.3 | 19.97 |
| Comparative Example 4 | 4 | 380 | 2 | 49.2 | 18.79 |

**Experimental Example**

The performance of lithium secondary batteries using silicon-carbon-containing electrode materials prepared according to the examples and comparative examples was measured and evaluated as follows.

**(1) Measurement of capacity retention (cycle life characteristics) during repeated charging and discharging**

For each lithium secondary battery in the examples and comparative examples, 400 cycles of 0.3C CC/CV charging (4.2 V, 0.1C cut-off) and 0.5C CC discharging (2.7 V cut-off) were repeated at 45 °C. The capacity retention was evaluated as the percentage of the discharge capacity measured at 400th cycle divided by the initial discharge capacity at the first cycle.
The evaluation results are shown in Table 2 below.

[TABLE 2]

| | Capacity retention [1] (%) | Discharge capacity (Ah) |
|---|---|---|
| Example 1 | 84.2 | 22.0 |
| Example 2 | 86.2 | 21.8 |
| Example 3 | 83.1 | 21.6 |
| Example 4 | 80.7 | 21.8 |
| Comparative Example 1 | 77.0 | 22.2 |
| Comparative Example 2 | 80.3 | 21.3 |
| Comparative Example 3 | 77.8 | 22.1 |
| Comparative Example 4 | 79.4 | 22.0 |

1) Test conditions: 45 °C, 400 cycles

Referring to Tables 1 and 2, in Examples 1 to 4, where the batteries were manufactured using silicon-carbon-containing electrode materials having a peak intensity ratio of the Raman spectrum (($I_B / I_A$) × 100), expressed as a percentage in the range of 3% to 18%, the cycle life characteristics of the secondary batteries were improved.

In Example 4, where the content of silicon based on the total weight of the electrode material was relatively low, the capacity retention was correspondingly lower.

In the comparative examples, where the batteries were manufactured using silicon-carbon-containing electrode materials having a peak intensity ratio of the Raman spectrum expressed as a percentage below 3% or above 18%, the cycle life characteristics deteriorated.

The invention relates also to the following numbered aspects:

Aspect 1. A silicon-carbon-containing electrode material comprising:

a porous carbon structure including pores; and
a silicon-containing coating layer formed on the porous carbon structure,
wherein the peak intensity ratio of the Raman spectrum expressed as a percentage, as defined by Equation 1 below, is 3% to 18%:

$$[\text{Equation 1}]$$

$$\text{Peak intensity ratio of Raman spectrum (\%)} = (I_B / I_A) \times 100$$

(in Equation 1, $I_A$ represents the maximum peak intensity at 2500 cm$^{-1}$ to 3000 cm$^{-1}$ when the wavenumber range of 2300 cm$^{-1}$ to 3120 cm$^{-1}$ of the Raman spectrum is used as the baseline, and $I_B$ represents the maximum peak intensity at 2080 cm$^{-1}$ to 2120 cm$^{-1}$ when the wavenumber range of 1850 cm$^{-1}$ to 2200 cm$^{-1}$ of the Raman spectrum is used as the baseline). Aspect 2. The silicon-carbon-containing electrode material according to aspect 1, wherein the peak intensity ratio of the Raman spectrum expressed as a percentage is 4% to 15%. Aspect 3. The silicon-carbon-containing electrode material according to aspect 1 or aspect 2, wherein the peak intensity ratio of the Raman spectrum expressed as a percentage is 4.73% to 13.85%.

Aspect 4. The silicon-carbon-containing electrode material according to any one of aspects 1 to 3, wherein the content of silicon based on the total weight of the electrode material is 38% by weight to 60% by weight.

Aspect 5. The silicon-carbon-containing electrode material according to any one of aspects 1 to 4, wherein the content of silicon based on the total weight of the electrode material is 45% by weight to 55% by weight.

Aspect 6. The silicon-carbon-containing electrode material according to any one of aspects 1 to 5, wherein the content of silicon based on the total weight of the electrode material is 35.9% by weight to 49.3% by weight.

Aspect 7. A method for manufacturing a silicon-carbon-containing electrode material, the method comprising:

preparing a porous carbon structure including pores;
supplying a silicon source gas onto the porous carbon structure in a reactor to form a silicon-containing coating layer on the porous carbon structure; and
reducing the pressure within the reactor to a range of 1 Torr to 250 Torr to obtain a silicon-carbon-containing electrode material.

Aspect 8. The method according to aspect 7, wherein the peak intensity ratio of the Raman spectrum, expressed as a percentage and as defined by Equation 1 below, measured from the silicon-carbon-containing electrode material, is 3% to 18%:

$$[\text{Equation 1}]$$

$$\text{Peak intensity ratio of Raman spectrum (\%)} = (I_B / I_A) \times 100$$

(in Equation 1, $I_A$ represents the maximum peak intensity at 2500 cm$^{-1}$ to 3000 cm$^{-1}$ when the wavenumber range of 2300 cm$^{-1}$ to 3120 cm$^{-1}$ of the Raman spectrum is used as the baseline, and $I_B$ represents the maximum peak intensity at 2080 cm$^{-1}$ to 2120 cm$^{-1}$ when the wavenumber range of 1850 cm$^{-1}$ to 2200 cm$^{-1}$ of the Raman spectrum is used as the baseline).

Aspect 9. The method according to aspect 7 or aspect 8, wherein the supply of the silicon source gas is performed at a temperature of 300 °C to 600 °C.

Aspect 10. The method according to any one of aspects 7 to 9, wherein the supply of the silicon source gas is performed for 2 to 8 hours.

Aspect 11. The method according to any one of aspects 7 to 10, wherein the silicon source gas is a gas mixture of silane gas and a non-reactive gas.

Aspect 12. The method according to any one of aspects 7 to 11, wherein the depressurization is performed at a temperature of 200 °C to 600 °C.

Aspect 13. The method according to any one of aspects 7 to 12, wherein the depressurization is performed for 0.5 hours to 3.5 hours.

Aspect 14. The method according to any one of aspects 7 to 13, wherein the depressurization is performed under a non-reactive gas atmosphere.

Aspect 15. A lithium secondary battery comprising:

an anode including the silicon-carbon-containing electrode material according to any one of aspects 1 to 6; and
a cathode disposed opposite to the anode.

[Description of Reference Numerals]

100: Cathode
105: Cathode current collector
107: Cathode lead
110: Cathode active material layer
120: Anode active material layer
125: Anode current collector
127: Anode lead
130: Anode
140: Separator
150: Electrode assembly
160: Case

## Claims

1. A silicon-carbon-containing electrode material comprising:

a porous carbon structure including pores; and
a silicon-containing coating layer formed on the porous carbon structure,
wherein the peak intensity ratio of the Raman spectrum expressed as a percentage, as defined by Equation 1 below, is 3% to 18%:

[Equation 1]

$$\text{Peak intensity ratio of Raman spectrum (\%)} = (I_B / I_A) \times 100$$

(in Equation 1, $I_A$ represents the maximum peak intensity at 2500 cm$^{-1}$ to 3000 cm$^{-1}$ when the wavenumber range of 2300 cm$^{-1}$ to 3120 cm$^{-1}$ of the Raman spectrum is used as the baseline, and $I_B$ represents the maximum peak intensity at 2080 cm$^{-1}$ to 2120 cm$^{-1}$ when the wavenumber range of 1850 cm$^{-1}$ to 2200 cm$^{-1}$ of the Raman spectrum is used as the baseline).

2. The silicon-carbon-containing electrode material according to claim 1, wherein the peak intensity ratio of the Raman spectrum expressed as a percentage is 4% to 15%.

3. The silicon-carbon-containing electrode material according to claim 1 or claim 2, wherein the peak intensity ratio of the Raman spectrum expressed as a percentage is 4.73% to 13.85%.

4. The silicon-carbon-containing electrode material according to any one of claims 1 to 3, wherein the content of silicon based on the total weight of the electrode material is 38% by weight to 60% by weight.

5. The silicon-carbon-containing electrode material according to any one of claims 1 to 4, wherein the content of silicon based on the total weight of the electrode material is 45% by weight to 55% by weight.

6. The silicon-carbon-containing electrode material according to any one of claims 1 to 5, wherein the content of silicon based on the total weight of the electrode material is 35.9% by weight to 49.3% by weight.

7. A method for manufacturing a silicon-carbon-containing electrode material, the method comprising:

preparing a porous carbon structure including pores;
supplying a silicon source gas onto the porous carbon structure in a reactor to form a silicon-containing coating layer on the porous carbon structure; and
reducing the pressure within the reactor to a range of 1 Torr to 250 Torr to obtain a silicon-carbon-containing electrode material.

8. The method according to claim 7, wherein the peak intensity ratio of the Raman spectrum, expressed as a percentage and as defined by Equation 1 below, measured from the silicon-carbon-containing electrode material, is 3% to 18%:

[Equation 1]

$$\text{Peak intensity ratio of Raman spectrum (\%)} = (I_B / I_A) \times 100$$

(in Equation 1, $I_A$ represents the maximum peak intensity at 2500 $cm^{-1}$ to 3000 $cm^{-1}$ when the wavenumber range of 2300 $cm^{-1}$ to 3120 $cm^{-1}$ of the Raman spectrum is used as the baseline, and $I_B$ represents the maximum peak intensity at 2080 $cm^{-1}$ to 2120 $cm^{-1}$ when the wavenumber range of 1850 $cm^{-1}$ to 2200 $cm^{-1}$ of the Raman spectrum is used as the baseline).

9. The method according to claim 7 or claim 8, wherein the supply of the silicon source gas is performed at a temperature of 300 °C to 600 °C.

10. The method according to any one of claims 7 to 9, wherein the supply of the silicon source gas is performed for 2 to 8 hours.

11. The method according to any one of claims 7 to 10, wherein the silicon source gas is a gas mixture of silane gas and a non-reactive gas.

12. The method according to any one of claims 7 to 11, wherein the depressurization is performed at a temperature of 200 °C to 600 °C.

13. The method according to any one of claims 7 to 12, wherein the depressurization is performed for 0.5 hours to 3.5 hours.

14. The method according to any one of claims 7 to 13, wherein the depressurization is performed under a non-reactive gas atmosphere.

15. A lithium secondary battery comprising:

an anode including the silicon-carbon-containing electrode material according to any one of claims 1 to 6; and
a cathode disposed opposite to the anode.

[FIG. 1]

[FIG. 2]

[FIG. 3]

[FIG. 4A]

[FIG. 4B]

Example 3

[FIG. 4C]

Comparative Example 1

[FIG. 4D]

[FIG. 5A]

[FIG. 5B]

Europäisches
Patentamt
European
Patent Office
Office européen
des brevets

# EUROPEAN SEARCH REPORT

**Application Number**

EP 25 21 0238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/031227 A1 (ENWIRES [FR]) 9 March 2023 (2023-03-09) | 1-5, 7-11, 13-15 | INV. H01M4/36 H01M4/38 |
| Y | * abstract * & US 2024/356008 A1 (BURCHAK OLGA [FR]) 24 October 2024 (2024-10-24) * paragraph [0015] * * paragraph [0053] - paragraph [0056] * * paragraph [0134] - paragraph [0226] * * paragraph [0320] - paragraph [0326] * * paragraph [0264] - paragraph [0291] * ----- | 6,12 | H01M4/04 H01M4/587 H01M4/62 |
| Y | US 2024/128443 A1 (KIM HEE SOO [KR] ET AL) 18 April 2024 (2024-04-18) | 6 | |
| A | * paragraph [0077] - paragraph [0081] * ----- | 1-5,7-15 | |
| Y | EP 3 836 261 A1 (GROUP14 TECHNOLOGIES INC [US]) 16 June 2021 (2021-06-16) | 12 | |
| A | * abstract * * table 11 * ----- | 1-11,14, 15 | |
| A | CN 112 768 668 A (ZHUZHOU FULLAD TECH CO LTD) 7 May 2021 (2021-05-07) * the whole document * ----- | 1-15 | **TECHNICAL FIELDS SEARCHED (IPC)** H01M |
| A | US 2024/318308 A1 (TILLMANN JAN [DE] ET AL) 26 September 2024 (2024-09-26) * the whole document * ----- | 1-15 | |
| A | WO 2023/088540 A1 (WACKER CHEMIE AG [DE]) 25 May 2023 (2023-05-25) * abstract * & US 2025/343233 A1 (KALYAKINA ALENA [DE] ET AL) 6 November 2025 (2025-11-06) * the whole document * ----- | 1-15 | |

The present search report has been drawn up for all claims

| Place of search | Date of completion of the search | Examiner |
|---|---|---|
| The Hague | 20 March 2026 | Iglesias van M., H |

EPO FORM 1503 03.82 (P4C01)

## ANNEX TO THE EUROPEAN SEARCH REPORT
## ON EUROPEAN PATENT APPLICATION NO.

EP 25 21 0238

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | Publication date | Patent family member(s) | Publication date |
|---|---|---|---|
| WO 2023031227 A1 | 09-03-2023 | CN 118103327 A | 28-05-2024 |
| | | EP 4396131 A1 | 10-07-2024 |
| | | JP 2024534889 A | 26-09-2024 |
| | | KR 20240054329 A | 25-04-2024 |
| | | US 2024356008 A1 | 24-10-2024 |
| | | WO 2023031227 A1 | 09-03-2023 |
| US 2024128443 A1 | 18-04-2024 | CN 117855459 A | 09-04-2024 |
| | | EP 4354540 A1 | 17-04-2024 |
| | | KR 20240049027 A | 16-04-2024 |
| | | US 2024128443 A1 | 18-04-2024 |
| EP 3836261 A1 | 16-06-2021 | CN 108475779 A | 31-08-2018 |
| | | CN 113224274 A | 06-08-2021 |
| | | CN 119419246 A | 11-02-2025 |
| | | EP 3341990 A1 | 04-07-2018 |
| | | EP 3836261 A1 | 16-06-2021 |
| | | EP 4286355 A2 | 06-12-2023 |
| | | EP 4512791 A2 | 26-02-2025 |
| | | JP 7115976 B2 | 09-08-2022 |
| | | JP 7458445 B2 | 29-03-2024 |
| | | JP 7624539 B2 | 30-01-2025 |
| | | JP 7813920 B2 | 13-02-2026 |
| | | JP 2018534720 A | 22-11-2018 |
| | | JP 2022153561 A | 12-10-2022 |
| | | JP 2024073597 A | 29-05-2024 |
| | | JP 2025066766 A | 23-04-2025 |
| | | KR 20180113187 A | 15-10-2018 |
| | | KR 20230091915 A | 23-06-2023 |
| | | KR 20230092015 A | 23-06-2023 |
| | | KR 20240023451 A | 21-02-2024 |
| | | KR 20250080911 A | 05-06-2025 |
| | | US 11495798 B1 | 08-11-2022 |
| | | US 2017170477 A1 | 15-06-2017 |
| | | US 2019280298 A1 | 12-09-2019 |
| | | US 2020075954 A1 | 05-03-2020 |
| | | US 2020152983 A1 | 14-05-2020 |
| | | US 2020365896 A1 | 19-11-2020 |
| | | US 2022231296 A1 | 21-07-2022 |
| | | US 2023058348 A1 | 23-02-2023 |
| | | WO 2017040299 A1 | 09-03-2017 |
| CN 112768668 A | 07-05-2021 | NONE | |
| US 2024318308 A1 | 26-09-2024 | CN 117715865 A | 15-03-2024 |
| | | EP 4377259 A1 | 05-06-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 21 0238

20-03-2026

| Patent document cited in search report | Publication date | Patent family member(s) | | Publication date |
|---|---|---|---|---|
| | | JP | 7810787 B2 | 03-02-2026 |
| | | JP | 2024527988 A | 26-07-2024 |
| | | KR | 20240038083 A | 22-03-2024 |
| | | US | 2024318308 A1 | 26-09-2024 |
| | | WO | 2023006209 A1 | 02-02-2023 |
| WO 2023088540 A1 | 25-05-2023 | CN | 118265674 A | 28-06-2024 |
| | | EP | 4433422 A1 | 25-09-2024 |
| | | JP | 7797641 B2 | 13-01-2026 |
| | | JP | 2024545001 A | 05-12-2024 |
| | | KR | 20240093632 A | 24-06-2024 |
| | | US | 2025343233 A1 | 06-11-2025 |
| | | WO | 2023088540 A1 | 25-05-2023 |

EPO FORM P0459

For more details about this annex : see Official Journal of the European Patent Office, No. 12/82

page 2 of 2